# EUROPEAN PATENT APPLICATION

(11) **EP 3 056 981 A1**
(43) Date of publication of application: **17.08.2016**
(21) Application number: 14812704.6
(22) Date of filing: 14.04.2014
(51) Int. Cl.: G06F 3/0488

(54) **IMAGE DISPLAY METHOD AND MASTER MOBILE EQUIPMENT**

(30) Priority: 08.10.2013 CN 201310465303
(71) Applicant: Huizhou TCL Mobile Communication Co., Ltd., Huizhou, Guangdong 516006 (CN)
(72) Inventor: ZHENG, Yu, Huizhou Guangdong 516006 (CN)
(74) Representative: Moore, Graeme Patrick
(86) International application number: PCT/CN2014/075273
(87) International publication number: WO 2015/051628

(57) **Abstract**

An image displaying method and a master mobile device are disclosed by the present disclosure. The image displaying method comprises: creating a data link connection and calibrating the clock; acquiring touch operation events by the master mobile device; determining, by the master mobile device, whether the input operations performed by the user have finished, and if the determination result is "yes", acquiring a relative position relationship between the slave mobile device and the master mobile device in a plane coordinate space according to the touch operation events; generating, by the master mobile device, a first image and transmitting the relative position relationship to the slave mobile device so that the slave mobile device displays a second image. The present disclosure can calculate the relative position relationship between the slave device and the master device so that the mobile devices display images according to the relative position relationship.

## Description

### FIELD OF THE INVENTION

The present disclosure relates to the technical field of communications, and more particularly, to an image displaying method and a master mobile device using the image displaying method.

### BACKGROUND OF THE INVENTION

Owing to continuous advancement of the science and technologies, mobile devices are finding increasingly wider applications in people's life, and have become indispensable for the people no matter at work or in the life. Nowadays, having a large screen and a low profile has become a development tendency for various mobile devices. In order to satisfy the user's needs, many mobile devices having screens of maximized sizes have appeared on the market, and the screens have evolved from the small-sized screens in the past to screens sized 5-inch, 5.5-inch or with even larger sizes. However, in some circumstances, the screen size of a single mobile device still cannot satisfy the visual needs of the users and cannot satisfy the need for a plurality of users to view contents of mobile devices at the same time.

Accordingly, an urgent need exists in the art to provide an image displaying method and a master mobile device to solve the aforesaid problems.

### SUMMARY OF THE INVENTION

The main technical problem to be solved by the present disclosure is to provide an image displaying method and a master mobile device, which can calculate a relative position relationship between a slave mobile device and the master mobile device by means of the master mobile device so that the master mobile device and the slave mobile device can display images according to the relative position relationship.

To solve the aforesaid technical problems, a technical solution adopted by the present disclosure is as follows: an image displaying method is provided, which comprises the following steps of: creating a data link connection with a slave mobile device and calibrating the clock together with the slave mobile device by a master mobile device so that the time of the slave mobile device keeps synchronized with the time of the master mobile device; acquiring a first touch operation event corresponding to an input operation performed by a user on a touch screen of the master mobile device and receiving information from the slave mobile device by the master mobile device, wherein the information comprises a second touch operation event corresponding to an input operation performed by the user on a touch screen of the slave mobile device; determining, by the master mobile device, whether the input operation performed by the user on the touch screen of the master mobile device and the input operation performed by the user on the touch screen of the slave mobile device have finished, and if the determination result is "yes", acquiring a relative position relationship between the slave mobile device and the master mobile device in a plane coordinate space according to the first touch operation event and the second touch operation event; and generating, by the master mobile device, a first image corresponding to the first touch operation event and displaying the first image on the display screen of the master mobile device, and transmitting the relative position relationship to the slave mobile device so that the slave mobile device displays a second image on the display screen of the slave mobile device according to the relative position relationship, wherein the second image is generated by the slave mobile device according to the second touch operation event, and the first image and the second image form an overall image; wherein the step of calibrating the clock together with the slave mobile device by a master mobile device so that the time of the slave mobile device keeps synchronized with the time of the master mobile device comprises: acquiring, by the master mobile device, a standard time of the master mobile device, transmitting the standard time to the slave mobile device, and controlling the slave mobile device to change the time of the slave mobile device into the standard time of the master mobile device so as to keep the standard time of the master mobile device as the synchronized time between the slave mobile device and the master mobile device; the step of determining, by the master mobile device, whether the input operation performed by the user on the touch screen of the master mobile device and the input operation performed by the user on the touch screen of the slave mobile device have finished comprises: determining, by the master mobile device, whether duration of the input operation performed by the user on the touch screen of the master mobile device and duration of the input operation performed by the user on the touch screen of the slave mobile device exceed a preset duration; and determining that the input operation performed by the user on the master mobile device and the input operation performed by the user on the slave mobile device have finished if the duration of the input operation performed by the user on the touch screen of the master mobile device and the duration of the input operation performed by the user on the touch screen of the slave mobile device exceed the preset duration.

Preferably, the first touch operation event comprises a touch start time of the touch of the user on the master mobile device, a touch end-up time of the touch of the user on the master mobile device, a coordinate of a touch start position of the touch of the user on the master mobile device in the plane coordinate space, and a coordinate of a touch end-up position of the touch of the user on the master mobile device in the plane coordinate space; and the second touch operation event comprises a touch start time of the touch of the user on the slave mobile device, a touch end-up time of the touch of the user on the slave mobile device, a coordinate of a touch start position of the touch of the user on the slave mobile device in the plane coordinate space, and a coordinate of a touch end-up position of the touch of the user on the slave mobile device in the plane coordinate space; wherein the plane coordinate space takes a center of the screen of the master mobile device as a coordinate origin, a right side of the center of the screen of the master mobile device as a positive X-axis direction, a left side of the center of the screen of the master mobile device as a negative X-axis direction, an upper side of the center of the screen of the master mobile device as a positive Y-axis direction and a lower side of the center of the screen of the master mobile device as a negative Y-axis direction.

Preferably, the step of acquiring a relative position relationship between the slave mobile device and the master mobile device in a plane coordinate space according to the first touch operation event and the second touch operation event comprises: acquiring the first touch operation event and the second touch operation event that are close in time to each other by the master mobile device, and determining, by the master mobile device, that the first touch operation event and the second touch operation event are consecutive touch operation events if a time interval between the touch end-up time of the first touch operation event and the touch start time of the second touch operation event is smaller than a preset value; acquiring a trajectory of the first touch operation event on the touch screen of the master mobile device and a trajectory of the second touch operation event on the touch screen of the slave mobile device by the master mobile device; and determining, by the master mobile device, coordinates of the trajectories of the consecutive touch operation events in the plane coordinate space of the master mobile device according to the trajectory of the first touch operation event of the consecutive touch operation events on the touch screen of the master mobile device and the trajectory of the second touch operation event of the consecutive touch operation events on the touch screen of the slave mobile device so as to determine the relative position relationship between the first touch operation event and the second touch operation event in the plane coordinate space of the master mobile device.

To solve the aforesaid technical problems, another technical solution adopted by the present disclosure is as follows: an image displaying method is provided, which comprises the following steps of: creating a data link connection with a slave mobile device and calibrating the clock together with the slave mobile device by a master mobile device so that the time of the slave mobile device keeps synchronized with the time of the master mobile device; acquiring a first touch operation event corresponding to an input operation performed by a user on a touch screen of the master mobile device and receiving information from the slave mobile device by the master mobile device, wherein the information comprises a second touch operation event corresponding to an input operation performed by the user on a touch screen of the slave mobile device; determining, by the master mobile device, whether the input operation performed by the user on the touch screen of the master mobile device and the input operation performed by the user on the touch screen of the slave mobile device have finished, and if the determination result is "yes", acquiring a relative position relationship between the slave mobile device and the master mobile device in a plane coordinate space according to the first touch operation event and the second touch operation event; and generating, by the master mobile device, a first image corresponding to the first touch operation event and displaying the first image on the display screen of the master mobile device, and transmitting the relative position relationship to the slave mobile device so that the slave mobile device displays a second image on the display screen of the slave mobile device according to the relative position relationship, wherein the second image is generated by the slave mobile device according to the second touch operation event, and the first image and the second image form an overall image.

Preferably, the step of calibrating the clock together with the slave mobile device by a master mobile device so that the time of the slave mobile device keeps synchronized with the time of the master mobile device comprises: acquiring, by the master mobile device, a standard time of the master mobile device, transmitting the standard time to the slave mobile device, and controlling the slave mobile device to change the time of the slave mobile device into the standard time of the master mobile device so as to keep the standard time of the master mobile device as the synchronized time between the slave mobile device and the master mobile device.

Preferably, the first touch operation event comprises a touch start time of the touch of the user on the master mobile device, a touch end-up time of the touch of the user on the master mobile device, a coordinate of a touch start position of the touch of the user on the master mobile device in the plane coordinate space, and a coordinate of a touch end-up position of the touch of the user on the master mobile device in the plane coordinate space; and the second touch operation event comprises a touch start time of the touch of the user on the slave mobile device, a touch end-up time of the touch of the user on the slave mobile device, a coordinate of a touch start position of the touch of the user on the slave mobile device in the plane coordinate space, and a coordinate of a touch end-up position of the touch of the user on the slave mobile device in the plane coordinate space; wherein the plane coordinate space takes a center of the screen of the master mobile device as a coordinate origin, a right side of the center of the screen of the master mobile device as a positive X-axis direction, a left side of the center of the screen of the master mobile device as a negative X-axis direction, an upper side of the center of the screen of the master mobile device as a positive Y-axis direction and a lower side of the center of the screen of the master mobile device as a negative Y-axis direction.

Preferably, the step of determining, by the master mobile device, whether the input operation performed by the user on the touch screen of the master mobile device and the input operation performed by the user on the touch screen of the slave mobile device have finished comprises: determining, by the master mobile device, whether duration of the input operation performed by the user on the touch screen of the master mobile device and duration of the input operation performed by the user on the touch screen of the slave mobile device exceed a preset duration; and determining that the input operation performed by the user on the master mobile device and the input operation performed by the user on the slave mobile device have finished if the duration of the input operation performed by the user on the touch screen of the master mobile device and the duration of the input operation performed by the user on the touch screen of the slave mobile device exceed the preset duration.

Preferably, the step of acquiring a relative position relationship between the slave mobile device and the master mobile device in a plane coordinate space according to the first touch operation event and the second touch operation event comprises: acquiring the first touch operation event and the second touch operation event that are close in time to each other by the master mobile device, and determining, by the master mobile device, that the first touch operation event and the second touch operation event are consecutive touch operation events if a time interval between the touch end-up time of the first touch operation event and the touch start time of the second touch operation event is smaller than a preset value; acquiring a trajectory of the first touch operation event on the touch screen of the master mobile device and a trajectory of the second touch operation event on the touch screen of the slave mobile device by the master mobile device; and determining, by the master mobile device, coordinates of the trajectories of the consecutive touch operation events in the plane coordinate space of the master mobile device according to the trajectory of the first touch operation event of the consecutive touch operation events on the touch screen of the master mobile device and the trajectory of the second touch operation event of the consecutive touch operation events on the touch screen of the slave mobile device so as to determine the relative position relationship between the first touch operation event and the second touch operation event in the plane coordinate space of the master mobile device.

To solve the aforesaid technical problems, yet another technical solution adopted by the present disclosure is as follows: a master mobile device is provided, which comprises a connecting and calibrating module, a data acquiring module, a data processing module and an image processing module, the connecting and calibrating module is connected to the data acquiring module, the data acquiring module is connected to the data processing module, and the data processing module is connected to the image processing module, wherein: the connecting and calibrating module is configured to create a data link connection with a slave mobile device and calibrate the clock together with the slave mobile device so that the time of the slave mobile device keeps synchronized with the time of the master mobile device; the data acquiring module is configured to acquire a first touch operation event corresponding to an input operation performed by a user on a touch screen of the master mobile device and receive information from the slave mobile device, wherein the information comprises a second touch operation event corresponding to an input operation performed by the user on a touch screen of the slave mobile device; the data processing module is configured to determine whether the input operation performed by the user on the touch screen of the master mobile device and the input operation performed by the user on the touch screen of the slave mobile device have finished, and if the determination result is "yes", the data processing module acquires a relative position relationship between the slave mobile device and the master mobile device in a plane coordinate space according to the first touch operation event and the second touch operation event; and the image processing module is configured to generate a first image corresponding to the first touch operation event and display the first image on the display screen of the master mobile device, and transmit the relative position relationship to the slave mobile device so that the slave mobile device displays a second image on the display screen of the slave mobile device according to the relative position relationship, wherein the second image is generated by the slave mobile device according to the second touch operation event, and the first image and the second image form an overall image.

Preferably, the connecting and calibrating module acquires a standard time of the master mobile device, transmits the standard time to the slave mobile device, and controls the slave mobile device to change the time of the slave mobile device into the standard time of the master mobile device so as to keep the standard time of the master mobile device as the synchronized time between the slave mobile device and the master mobile device.

Preferably, the first touch operation event comprises a touch start time of the touch of the user on the master mobile device, a touch end-up time of the touch of the user on the master mobile device, a coordinate of a touch start position of the touch of the user on the master mobile device in the plane coordinate space, and a coordinate of a touch end-up position of the touch of the user on the master mobile device in the plane coordinate space; and the second touch operation event comprises a touch start time of the touch of the user on the slave mobile device, a touch end-up time of the touch of the user on the slave mobile device, a coordinate of a touch start position of the touch of the user on the slave mobile device in the plane coordinate space, and a coordinate of a touch end-up position of the touch of the user on the slave mobile device in the plane coordinate space; wherein the plane coordinate space takes a center of the screen of the master mobile device as a coordinate origin, a right side of the center of the screen of the master mobile device as a positive X-axis direction, a left side of the center of the screen of the master mobile device as a negative X-axis direction, an upper side of the center of the screen of the master mobile device as a positive Y-axis direction and a lower side of the center of the screen of the master mobile device as a negative Y-axis direction.

Preferably, the data processing module determines whether duration of the input operation performed by the user on the touch screen of the master mobile device and duration of the input operation performed by the user on the touch screen of the slave mobile device exceed a preset duration; and the data processing module determines that the input operation performed by the user on the master mobile device and the input operation performed by the user on the slave mobile device have finished if the duration of the input operation performed by the user on the touch screen of the master mobile device and the duration of the input operation performed by the user on the touch screen of the slave mobile device exceed the preset duration.

Preferably, the data processing module acquires the first touch operation event and the second touch operation event that are close in time to each other, and determines that the first touch operation event and the second touch operation event are consecutive touch operation events if a time interval between the touch end-up time of the first touch operation event and the touch start time of the second touch operation event is smaller than a preset value; the data processing module acquires a trajectory of the first touch operation event on the touch screen of the master mobile device and a trajectory of the second touch operation event on the touch screen of the slave mobile device; and the data processing module determines coordinates of the trajectories of the consecutive touch operation events in the plane coordinate space of the master mobile device according to the trajectory of the first touch operation event of the consecutive touch operation events on the touch screen of the master mobile device and the trajectory of the second touch operation event of the consecutive touch operation events on the touch screen of the slave mobile device so as to determine the relative position relationship between the first touch operation event and the second touch operation event in the plane coordinate space of the master mobile device.

The present disclosure has the following benefits: as compared to the prior art, the present disclosure utilizes a master mobile device to create a data link connection with a slave mobile device and to calibrate the clock together with the slave mobile device; the master mobile device acquires a first touch operation event and receives information from the slave mobile device, wherein the information comprises a second touch operation event. The master mobile device determines whether the input operations performed by the user have finished, and if the determination result is "yes", the master mobile device acquires a relative position relationship between the slave mobile device and the master mobile device in a plane coordinate space according to the first touch operation event and the second touch operation event. The master mobile device generates a first image corresponding to the first touch operation event and transmits the relative position relationship to the slave mobile device so that the slave mobile device displays a second image according to the relative position relationship. The present disclosure can calculate the relative position relationship between the slave mobile device and the master mobile device by means of the master mobile device so that the master mobile device and the slave mobile device can display images according to the relative position relationship.

### BRIEF DESCRIPTION OF THE DRAWINGS

FIG. 1 is a schematic flowchart diagram of an image displaying method according to a first embodiment of the present disclosure;
FIG. 2 is a schematic flowchart diagram of step S103 in FIG. 1 according to the first embodiment;
FIG. 3 is a schematic flowchart diagram of step S104 in FIG. 1 according to the first embodiment;
FIG. 4 is a schematic structural view of a master mobile device and slave mobile devices of the present disclosure; and
FIG. 5 is a schematic structural view of the master mobile device of the present disclosure.

### DETAILED DESCRIPTION OF THE INVENTION

Hereinafter, the present disclosure will be described in detail with reference to the attached drawings and embodiments.

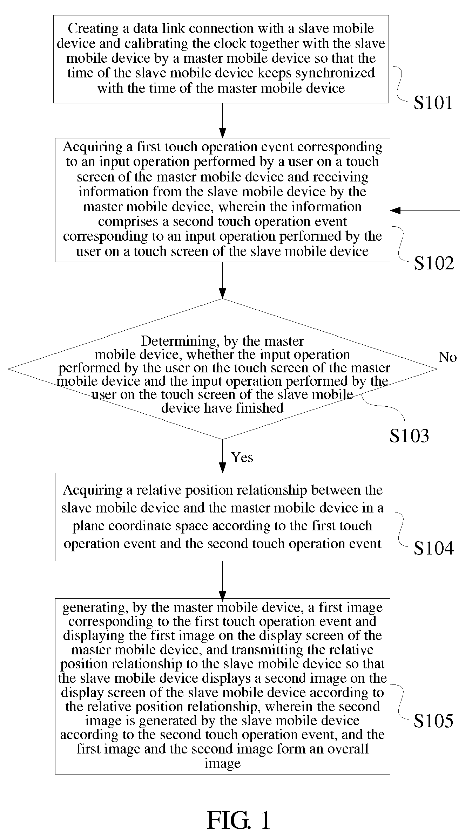

Referring to FIG. 1, there is shown a schematic flowchart diagram of an image displaying method according to a first embodiment of the present disclosure. The image displaying method comprises the following steps:
Step S101: creating a data link connection with a slave mobile device and calibrating the clock together with the slave mobile device by a master mobile device so that the time of the slave mobile device keeps synchronized with the time of the master mobile device.

After the step S101, the following step S102 is executed: acquiring a first touch operation event corresponding to an input operation performed by a user on a touch screen of the master mobile device and receiving information from the slave mobile device by the master mobile device, wherein the information comprises a second touch operation event corresponding to an input operation performed by the user on a touch screen of the slave mobile device.

After the step S102, the following step S103 is executed: determining, by the master mobile device, whether the input operation performed by the user on the touch screen of the master mobile device and the input operation performed by the user on the touch screen of the slave mobile device have finished.

If the master mobile device determines that the input operation performed by the user on the touch screen of the master mobile device and the input operation performed by the user on the touch screen of the slave mobile device have not finished yet, then the process returns back to the step S102.

If the master mobile device determines that the input operation performed by the user on the touch screen of the master mobile device and the input operation performed by the user on the touch screen of the slave mobile device have finished, step S104 is executed: acquiring a relative position relationship between the slave mobile device and the master mobile device in a plane coordinate space according to the first touch operation event and the second touch operation event.

After the step S104, the following step S105 is executed: generating, by the master mobile device, a first image corresponding to the first touch operation event and displaying the first image on the display screen of the master mobile device, and transmitting the relative position relationship to the slave mobile device so that the slave mobile device displays a second image on the display screen of the slave mobile device according to the relative position relationship, wherein the second image is generated by the slave mobile device according to the second touch operation event, and the first image and the second image form an overall image.

In the step S101, the master mobile device creates a point-to-point or point-to-multipoint data link connection with at least one slave mobile device via Bluetooth, WIFI (Wireless Fidelity), or other communication technologies. After the data link connection is created, the master mobile device records the identifier of each of the mobile devices so that the identifiers of all the slave mobile devices connected to the master mobile device are different from each other.

After creating the data link connection with the slave mobile device, the master mobile device creates a plane coordinate space for all of the mobile devices. The plane coordinate space takes a center of the screen of the master mobile device as a coordinate origin, a right side of the center of the screen of the master mobile device as a positive X-axis direction, a left side of the center of the screen of the master mobile device as a negative X-axis direction, an upper side of the center of the screen of the master mobile device as a positive Y-axis direction and a lower side of the center of the screen of the master mobile device as a negative Y-axis direction. Of course, in other embodiments, the plane coordinate space may also take a center of the screen of one of the slave mobile devices as a coordinate origin, or take some other position of the screen as the coordinate origin, and this will not be further described herein.

In this embodiment, when the master mobile device calibrates the clock together with the slave mobile device, the master mobile device acquires a standard time of the master mobile device, transmits the standard time to the slave mobile device, and controls the slave mobile device to change the time of the slave mobile device into the standard time of the master mobile device so as to keep the standard time of the master mobile device as the synchronized time between the slave mobile device and the master mobile device.

In other embodiments, when the master mobile device calibrates the clock together with the slave mobile devices, the master mobile device acquires the standard time of the slave mobile devices one by one, and calculates the time difference between the standard time of the master mobile device and the standard time of each of the slave mobile devices one by one so as to obtain the average time difference. Then the master mobile device controls the synchronized time between the slave mobile devices and the master mobile device to be the sum of the standard time of the master mobile device and the average time difference.

In other embodiments, when the master mobile device calibrates the clock together with the slave mobile device, the master mobile device controls the slave mobile device and the master mobile device to initiate a standard SNTP (Simple Network Time Protocol) time service simultaneously so as to keep the network standard time as the synchronized time between the slave mobile device and the master mobile device. The master mobile device controls the slave mobile device and the master mobile device to initiate the standard SNTP time service simultaneously at least once so as to control system clock errors of all the mobile devices within an error degree of 10 ms that can be achieved by the SNTP technology. The network standard time is preferably Greenwich Mean Time (GMT).

In this embodiment, after the master mobile device has calibrated the clock together with the slave mobile device, the master mobile device sends a control instruction to inform all of the mobile devices to wait for input operations of the user on the touch screens of the mobile devices.

In the step S102, the first touch operation event comprises a touch start time of the touch of the user on the master mobile device, a touch end-up time of the touch of the user on the master mobile device, a coordinate of a touch start position of the touch of the user on the master mobile device in the plane coordinate space, a coordinate of a touch end-up position of the touch of the user on the master mobile device in the plane coordinate space, a physical height of the touch screen of the master mobile device, a physical width of the touch screen of the master mobile device and a resolution of the touch screen of the master mobile device. Of course, the first touch operation event further comprises other data of the master mobile device in other embodiments and this will not be further described herein.

The second touch operation event comprises a touch start time of the touch of the user on the slave mobile device, a touch end-up time of the touch of the user on the slave mobile device, a coordinate of a touch start position of the touch of the user on the slave mobile device in the plane coordinate space, a coordinate of a touch end-up position of the touch of the user on the slave mobile device in the plane coordinate space, a physical height of the touch screen of the slave mobile device, a physical width of the touch screen of the slave mobile device and a resolution of the touch screen of the slave mobile device. Of course, the second touch operation event further comprises other data of the slave mobile device in other embodiments and this will not be further described herein.

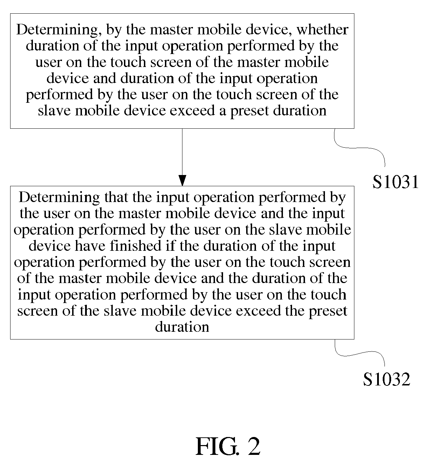

Referring to FIG. 2, there is shown a schematic flowchart diagram of the step S103 in FIG. 1 according to the first embodiment. The step S103 comprises the following sub-steps of:
Step S1031: determining, by the master mobile device, whether duration of the input operation performed by the user on the touch screen of the master mobile device and duration of the input operation performed by the user on the touch screen of the slave mobile device exceed a preset duration; and
Step S1032: determining, by the master mobile device, that the input operation performed by the user on the master mobile device and the input operation performed by the user on the slave mobile device have finished if the duration of the input operation performed by the user on the touch screen of the master mobile device and the duration of the input operation performed by the user on the touch screen of the slave mobile device exceed the preset duration.

The preset duration is a time value set by the user, and the preset duration is preferably 5 seconds.

In other embodiments, the master mobile device may determine whether the input operation performed by the user on the touch screen of the master mobile device and the input operation performed by the user on the touch screen of the slave mobile device have finished in the following way: the master mobile device determines whether instructions for initiatively informing the master mobile device of the finish of the operations have been received from the user. Specifically, the master mobile device may have a finish button disposed thereon, and when the user presses the finish button, the master mobile device receives the instructions for initiatively informing the master mobile device of the finish of the operations from the user.

In other embodiments, the master mobile device may also determine whether the input operation performed by the user on the touch screen of the master mobile device and the input operation performed by the user on the touch screen of the slave mobile device have finished in the following way: the master mobile device determines whether the input operations have finished by determining whether the duration of each of the input operations performed by the user on the touch screens of the mobile devices exceeds the preset duration and determining whether instructions for informing initiatively the master mobile device of the finish of the operations have been received from the user.

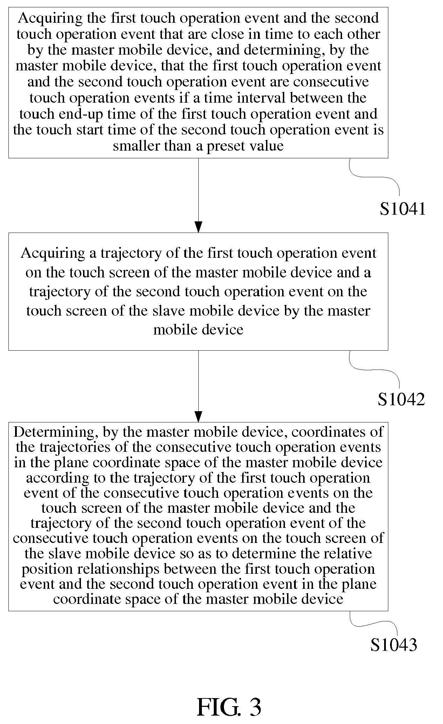

Referring to FIG. 3, there is shown a schematic flowchart diagram of step S104 in FIG. 1 according to the first embodiment. The step S104 comprises the following sub-steps of:
Step S1041: acquiring the first touch operation event and the second touch operation event that are close in time to each other by the master mobile device, and determining, by the master mobile device, that the first touch operation event and the second touch operation event are consecutive touch operation events if a time interval between the touch end-up time of the first touch operation event and the touch start time of the second touch operation event is smaller than a preset value;
Step S1042: acquiring a trajectory of the first touch operation event on the touch screen of the master mobile device and a trajectory of the second touch operation event on the touch screen of the slave mobile device by the master mobile device; and
Step S1043: determining, by the master mobile device, coordinates of the trajectories of the consecutive touch operation events in the plane coordinate space of the master mobile device according to the trajectory of the first touch operation event of the consecutive touch operation events on the touch screen of the master mobile device and the trajectory of the second touch operation event of the consecutive touch operation events on the touch screen of the slave mobile device so as to determine the relative position relationship between the first touch operation event and the second touch operation event in the plane coordinate space of the master mobile device.

In the step S1041, the master mobile device acquires two touch operation events that are close in time to each other, and the two touch operation events may be a first touch operation event and a second touch operation event, two first touch operation events, or two second touch operation events. If a time interval between the touch end-up time of the first touch operation event and the touch start time of the second touch operation event is smaller than a preset value or a duration of either of the touch operation events on the mobile device, the master mobile device determines that the two touch operation events occur within a same sliding action of the user and, thus, are consecutive touch operation events. In this way, every two consecutive touch operation events that are close in time to each other can be found so as to obtain all the consecutive touch operation events within a same consecutive sliding action of the user.

In the step S1043, the master mobile device obtains the start position and the end-up position of the trajectory of the first touch operation event on the touch screen of the master mobile device according to the fact that the touch start time of the trajectory of the first touch operation event on the touch screen of the master mobile device is smaller than the touch end-up time thereof, i.e., the touch time at the start position is smaller than the touch time at the end-up position. The master mobile device acquires the start position of the trajectory of the first touch operation event on the touch screen of the master mobile device, and makes the start position correspond to the coordinate of the master mobile device in the plane coordinate space so as to obtain the coordinate of the touch start position of the first touch operation event. The master mobile device acquires the end-up position of the trajectory of the first touch operation event on the touch screen of the master mobile device, and makes the end-up position correspond to the coordinate of the master mobile device in the plane coordinate space so as to obtain the coordinate of the touch end-up position of the first touch operation event. The master mobile device determines the coordinate of the trajectory of the first touch operation event on the touch screen of the master mobile device in the plane coordinate space of the master mobile device according to the coordinate of the touch start position, the coordinate of the touch end-up position, and the trajectory of the first touch operation event on the touch screen of the master mobile device.

The master mobile device obtains the start position and the end-up position of the trajectory of the second touch operation event on the touch screen of the slave mobile device according to the fact that the touch start time of the trajectory of the second touch operation event on the touch screen of the slave mobile device is smaller than the touch end-up time thereof, i.e., the touch time at the start position is smaller than the touch time at the end-up position. The master mobile device acquires the start position of the trajectory of the second touch operation event on the touch screen of the slave mobile device, and makes the start position correspond to the coordinate of the master mobile device in the plane coordinate space so as to obtain the coordinate of the touch start position of the second touch operation event. The master mobile device acquires the end-up position of the trajectory of the second touch operation event on the touch screen of the slave mobile device, and makes the end-up position correspond to the coordinate of the master mobile device in the plane coordinate space so as to obtain the coordinate of the touch end-up position of the second touch operation event. The master mobile device determines the coordinate of the trajectory of the second touch operation event on the touch screen of the slave mobile device in the plane coordinate space of the master mobile device according to the coordinate of the touch start position, the coordinate of the touch end-up position, and the trajectory of the second touch operation event on the touch screen of the slave mobile device.

Thus, coordinates of the trajectories of all the consecutive touch operation events in the plane coordinate space of the master mobile device can be obtained so as to obtain the relative position relationship between the first touch operation event and the second touch operation event in the plane coordinate space of the master mobile device, i.e., the coordinate positions of the trajectory of the first touch operation event and the trajectory of the second touch operation event in the plane coordinate space of the master mobile device.

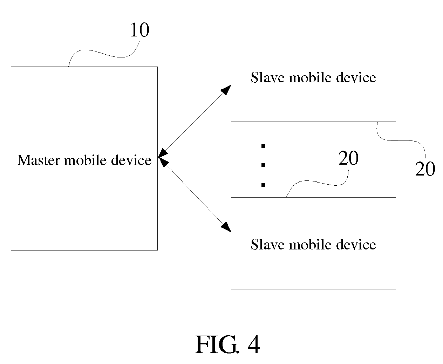

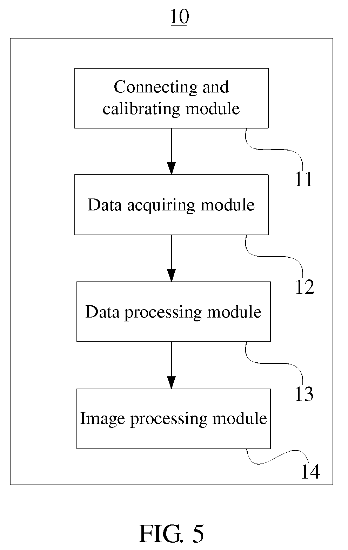

Referring to FIG. 4 and FIG. 5, FIG. 4 is a schematic structural view of a master mobile device and slave mobile devices of the present disclosure, and FIG. 5 is a schematic structural view of the master mobile device of the present disclosure. The master mobile device 10 corresponds to each of the master mobile devices in the aforesaid methods. The master mobile device 10 comprises a connecting and calibrating module 11, a data acquiring module 12, a data processing module 13 and an image processing module 14. The connecting and calibrating module 11 is connected to the data acquiring module 12, the data acquiring module 12 is connected to the data processing module 13, and the data processing module 13 is connected to the image processing module 14.

The connecting and calibrating module 11 is configured to create a data link connection with a slave mobile device 20 and calibrate the clock together with the slave mobile device 20 so that the time of the slave mobile device 20 keeps synchronized with the time of the master mobile device 10. The connecting and calibrating module 11 creates a point-to-point or point-to-multipoint data link connection with at least one slave mobile device 20 via Bluetooth, WIFI, or other communication technologies. After the data link connection is created, the master mobile device 10 records the identifier of each of the slave mobile devices 20 and the master mobile device 10 so that the identifiers of all the slave mobile devices 20 connected to the master mobile device are different from each other.

After creating the data link connection with the slave mobile device 20, the master mobile device 10 creates a plane coordinate space for all of the slave mobile devices 20 connected to the master mobile device 10. The plane coordinate space takes a center of the screen of the master mobile device 10 as a coordinate origin, a right side of the center of the screen of the master mobile device 10 as a positive X-axis direction, a left side of the center of the screen of the master mobile device 10 as a negative X-axis direction, an upper side of the center of the screen of the master mobile device 10 as a positive Y-axis direction and a lower side of the center of the screen of the master mobile device 10 as a positive Y-axis direction. Of course, in other embodiments, the plane coordinate space may also take a center of the screen of one of the slave mobile devices 20 as a coordinate origin, or take some other position of the screen as the coordinate origin, and this will not be further described herein.

In this embodiment, when the connecting and calibrating module 11 calibrates the clock together with the slave mobile device 20, the connecting and calibrating module 11 acquires a standard time of the master mobile device 10, transmits the standard time of the master mobile device 10 to the slave mobile device 20, and controls the slave mobile device 20 to change the time of the slave mobile device 20 into the standard time of the master mobile device 10 so as to keep the standard time of the master mobile device 10 as the synchronized time between the slave mobile device 20 and the master mobile device 10.

In other embodiments, when the connecting and calibrating module 11 calibrates the clock together with the slave mobile devices 20, the connecting and calibrating module 11 acquires the standard time of the slave mobile devices 20 one by one, and calculates the time difference between the standard time of the master mobile device 10 and the standard time of each of the slave mobile devices 20 one by one so as to obtain the average time difference. Then, the connecting and calibrating module 11 controls the synchronized time between the slave mobile devices 20 and the master mobile device 10 to be the sum of the standard time of the master mobile device 10 and the average time difference.

In other embodiments, when the connecting and calibrating module 11 calibrates the clock together with the slave mobile devices 20, the connecting and calibrating module 11 controls the slave mobile devices 20 and the master mobile device 10 to initiate a standard SNTP time service simultaneously so as to keep the network standard time as the synchronized time between the slave mobile devices 20 and the master mobile device 10. The connecting and calibrating module 11 controls the slave mobile devices 20 and the master mobile device 10 to initiate the standard SNTP time service simultaneously at least once so as to control system clock errors of all the slave mobile devices 20 and the master mobile device 10 to be within an error level of 10 ms that can be achieved by the SNTP technology. The network standard time is preferably Greenwich Mean Time (GMT).

In this embodiment, after the connecting and calibrating module 11 calibrates the clock together with the slave mobile devices 20, the master mobile device 10 sends a control instruction to inform all the slave mobile devices 20 and the master mobile device 10 to wait for input operations of the user on the touch screens of the slave mobile devices 20 and the master mobile device 10.

The data acquiring module 12 is configured to acquire a first touch operation event corresponding to an input operation performed by a user on a touch screen of the master mobile device 10 and receive information from the slave mobile device 20, wherein the information comprises a second touch operation event corresponding to an input operation performed by the user on a touch screen of the slave mobile device 20.

The first touch operation event comprises a touch start time of the touch of the user on the master mobile device 10, a touch end-up time of the touch of the user on the master mobile device 10, a coordinate of a touch start position of the touch of the user on the master mobile device 10 in the plane coordinate space, a coordinate of a touch end-up position of the touch of the user on the master mobile device 10 in the plane coordinate space, a physical height of the touch screen of the master mobile device 10, a physical width of the touch screen of the master mobile device 10 and a resolution of the touch screen of the master mobile device 10. Of course, the first touch operation event further comprises other data of the master mobile device 10 in other embodiments and this will not be further described herein.

The second touch operation event comprises a touch start time of the touch of the user on the slave mobile device 20, a touch end-up time of the touch of the user on the slave mobile device 20, a coordinate of a touch start position of the touch of the user on the slave mobile device 20 in the plane coordinate space, a coordinate of a touch end-up position of the touch of the user on the slave mobile device 20 in the plane coordinate space, a physical height of the touch screen of the slave mobile device 20, a physical width of the touch screen of the slave mobile device 20 and a resolution of the touch screen of the slave mobile device 20. Of course, the second touch operation event further comprises other data of the slave mobile device 20 in other embodiments and this will not be further described herein.

The data processing module 13 is configured to determine whether the input operation performed by the user on the touch screen of the master mobile device 10 and the input operation performed by the user on the touch screen of the slave mobile device 20 have finished.

Specifically, the data processing module 13 determines whether duration of the input operation performed by the user on the touch screen of the master mobile device 10 and duration of the input operation performed by the user on the touch screen of the slave mobile device 20 exceed a preset duration. If the duration of the input operation performed by the user on the touch screen of the master mobile device 10 and the duration of the input operation performed by the user on the touch screen of the slave mobile device 20 exceed the preset duration, the data processing module 13 determines that the input operation performed by the user on the touch screen of the master mobile device 10 and the input operation performed by the user on the touch screen of the slave mobile device 20 have finished. The preset duration is a time value set by the user, and the preset duration is preferably 5 seconds.

In other embodiments, the data processing module 13 may determine whether the input operation performed by the user on the touch screen of the master mobile device 10 and the input operation performed by the user on the touch screen of the slave mobile device 20 have finished in the following way: the data processing module 13 determines whether instructions for initiatively informing the master mobile device 10 of the finish of the operations have been received from the user. Specifically, the master mobile device 10 may have a finish button (not shown) disposed thereon, and when the user presses the finish button, the master mobile device 10 receives the instructions for informing initiatively the master mobile device 10 of the finish of the operations from the user.

In other embodiments, the data processing module 13 may also determine whether the input operation performed by the user on the touch screen of the master mobile device 10 and the input operation performed by the user on the touch screen of the slave mobile device 20 have finished in the following way: the master mobile device 10 determines whether the input operations have finished by determining whether the duration of each of the input operations performed by the user on the touch screens of the slave mobile device 20 and the master mobile device 10 exceeds the preset duration and determining whether instructions for informing initiatively the master mobile device 10 of the finish of the operations have been received from the user.

After determining that the input operation performed by the user on the touch screen of the master mobile device 10 and the input operation performed by the user on the touch screen of the slave mobile device 20 have finished, the data processing module 13 is further configured to acquire a relative position relationship between the slave mobile device 20 and the master mobile device 10 in a plane coordinate space according to the first touch operation event and the second touch operation event.

Specifically, the data processing module 13 acquires two touch operation events that are close in time to each other, and the two touch operation events may be a first touch operation event and a second touch operation event, two first touch operation events, or two second touch operation events. If a time interval between the touch end-up time of the first touch operation event and the touch start time of the second touch operation event is smaller than a preset value or a duration of any of the touch operation events on the master mobile device 10 or the slave mobile device 20, the data processing module 13 determines that the two touch operation events occur within a same sliding action of the user and, thus, are consecutive touch operation events. In this way, every two consecutive touch operation events that are close in time to each other can be found so as to obtain all the consecutive touch operation events within the same consecutive sliding action of the user.

The data processing module 13 acquires a trajectory of the first touch operation event on the touch screen of the master mobile device 10 and a trajectory of the second touch operation event on the touch screen of the slave mobile device 20.

The data processing module 13 obtains the start position and the end-up position of the trajectory of the first touch operation event on the touch screen of the master mobile device 10 according to the fact that the touch start time of the trajectory of the first touch operation event on the touch screen of the master mobile device 10 is smaller than the touch end-up time thereof, i.e., the touch time of the start position is smaller than the touch time of the end-up position. The data processing module 13 acquires the start position of the trajectory of the first touch operation event on the touch screen of the master mobile device 10, and makes the start position correspond to the coordinate of the master mobile device 10 in the plane coordinate space so as to obtain the coordinate of the touch start position of the first touch operation event. The data processing module 13 acquires the end-up position of the trajectory of the first touch operation event on the touch screen of the master mobile device 10, and makes the end-up position correspond to the coordinate of the master mobile device 10 in the plane coordinate space so as to obtain the coordinate of the touch end-up position of the first touch operation event. The data processing module 13 determines the coordinate of the trajectory of the first touch operation event on the touch screen of the master mobile device 10 in the plane coordinate space of the master mobile device 10 according to the coordinate of the touch start position, the coordinate of the touch end-up position, and the trajectory of the first touch operation event on the touch screen of the master mobile device 10.

The data processing module 13 obtains the start position and the end-up position of the trajectory of the second touch operation event on the touch screen of the slave mobile device 20 according to the fact that the touch start time of the trajectory of the second touch operation event on the touch screen of the slave mobile device 20 is smaller than the touch end-up time thereof, i.e., the touch time of the start position is smaller than the touch time of the end-up position. The data processing module 13 acquires the start position of the trajectory of the second touch operation event on the touch screen of the slave mobile device 20, and makes the start position correspond to the coordinate of the master mobile device 10 in the plane coordinate space so as to obtain the coordinate of the touch start position of the second touch operation event. The data processing module 13 acquires the end-up position of the trajectory of the second touch operation event on the touch screen of the slave mobile device 20, and makes the end-up position correspond to the coordinate of the master mobile device 10 in the plane coordinate space so as to obtain the coordinate of the touch end-up position of the second touch operation event. The data processing module 13 determines the coordinate of the trajectory of the second touch operation event on the touch screen of the slave mobile device 20 in the plane coordinate space of the master mobile device 10 according to the coordinate of the touch start position, the coordinate of the touch end-up position, and the trajectory of the second touch operation event on the touch screen of the slave mobile device 20.

Thus, the data processing module 13 can obtain coordinates of the trajectories of all the consecutive touch operation events in the plane coordinate space of the master mobile device 10 so as to obtain the relative position relationship between the first touch operation event and the second touch operation event in the plane coordinate space of the master mobile device 10, i.e., the coordinate positions of the trajectory of the first touch operation event and the trajectory of the second touch operation event in the plane coordinate space of the master mobile device 10.

The image processing module 14 is configured to generate a first image corresponding to the first touch operation event and display the first image on the display screen of the master mobile device 10, and transmit the relative position relationship to the slave mobile device 20 so that the slave mobile device 20 displays a second image on the display screen of the slave mobile device 20 according to the relative position relationship, wherein the second image is generated by the slave mobile device 20 according to the second touch operation event, and the first image and the second image form an overall image.

According to the above descriptions, the present disclosure utilizes a master mobile device to create a data link connection with a slave mobile device and to calibrate the clock together with the slave mobile device; the master mobile device acquires a first touch operation event and receives information from the slave mobile device, wherein the information comprises a second touch operation event; the master mobile device determines whether the input operations performed by the user have finished, and if the determination result is "yes", the master mobile device acquires a relative position relationship between the slave mobile device and the master mobile device in a plane coordinate space according to the first touch operation event and the second touch operation event; the master mobile device generates a first image corresponding to the first touch operation event and transmits the relative position relationship to the slave mobile device so that the slave mobile device displays a second image according to the relative position relationship. The present disclosure can calculate the relative position relationship between the slave device and the master device by means of the master mobile device so that the master mobile device and the slave mobile device display images according to the relative position relationship.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. An image displaying method, comprising the following steps of:
creating a data link connection with a slave mobile device and calibrating a clock together with the slave mobile device by a master mobile device, so that the time of the slave mobile device keeps synchronized with the time of the master mobile device;
acquiring a first touch operation event corresponding to an input operation performed by a user on a touch screen of the master mobile device and receiving information from the slave mobile device by the master mobile device, wherein the information comprises a second touch operation event corresponding to an input operation performed by the user on a touch screen of the slave mobile device;
determining, by the master mobile device, whether the input operation performed by the user on the touch screen of the master mobile device and the input operation performed by the user on the touch screen of the slave mobile device have finished by the master mobile device, and if the determination result is "yes", acquiring relative position relationship between the slave mobile device and the master mobile device in a plane coordinate space according to the first touch operation event and the second touch operation event;
generating, by the master mobile device, a first image corresponding to the first touch operation event and displaying the first image on the display screen of the master mobile device, and transmitting the relative position relationship to the slave mobile device so that the slave mobile device displays a second image on the display screen of the slave mobile device according to the relative position relationship, wherein the second image is generated by the slave mobile device according to the second touch operation event, and the first image and the second image form an overall image;
wherein the step of calibrating a clock together with the slave mobile device by a master mobile device so that the time of the slave mobile device keeps synchronized with the time of the master mobile device, comprises:
acquiring, by the master mobile device, a standard time of the master mobile device, transmitting the standard time to the slave mobile device, and controlling the slave mobile device to change the time of the slave mobile device into the standard time of the master mobile device so as to keep the standard time of the master mobile device as the synchronized time between the slave mobile device and the master mobile device;
the step of determining, by the master mobile device, whether the input operation performed by the user on the touch screen of the master mobile device and the input operation performed by the user on the touch screen of the slave mobile device have finished, comprises:
determining, by the master mobile device, whether duration of the input operation performed by the user on the touch screen of the master mobile device and duration of the input operation performed by the user on the touch screen of the slave mobile device exceed a preset duration; and
determining that the input operation performed by the user on the master mobile device and the input operation performed by the user on the slave mobile device have finished if the duration of the input operation performed by the user on the touch screen of the master mobile device and the duration of the input operation performed by the user on the touch screen of the slave mobile device exceed the preset duration.

2. The method of claim 1, wherein the first touch operation event comprises a touch start time of the touch of the user on the master mobile device, a touch end-up time of the touch of the user on the master mobile device, a coordinate of a touch start position of the touch of the user on the master mobile device in the plane coordinate space, and a coordinate of a touch end-up position of the touch of the user on the master mobile device in the plane coordinate space; and
the second touch operation event comprises a touch start time of the touch of the user on the slave mobile device, a touch end-up time of the touch of the user on the slave mobile device, a coordinate of a touch start position of the touch of the user on the slave mobile device in the plane coordinate space, and a coordinate of a touch end-up position of the touch of the user on the slave mobile device in the plane coordinate space;
wherein the plane coordinate space takes a center of the screen of the master mobile device as a coordinate origin, a right side of the center of the screen of the master mobile device as a positive X-axis direction, a left side of the center of the screen of the master mobile device as a negative X-axis direction, an upper side of the center of the screen of the master mobile device as a positive Y-axis direction and a lower side of the center of the screen of the master mobile device as a negative Y-axis direction.

3. The method of claim 1, wherein the step of acquiring a relative position relationship between the slave mobile device and the master mobile device in a plane coordinate space according to the first touch operation event and the second touch operation event comprises:
acquiring the first touch operation event and the second touch operation event that are close in time to each other by the master mobile device, and determining, by the master mobile device, that the first touch operation event and the second touch operation event are consecutive touch operation events if a time interval between the touch end-up time of the first touch operation event and the touch start time of the second touch operation event is smaller than a preset value;
acquiring a trajectory of the first touch operation event on the touch screen of the master mobile device and a trajectory of the second touch operation event on the touch screen of the slave mobile device by the master mobile device; and determining, by the master mobile device, coordinates of the trajectories of the consecutive touch operation events in the plane coordinate space of the master mobile device according to the trajectory of the first touch operation event of the consecutive touch operation events on the touch screen of the master mobile device and the trajectory of the second touch operation event of the consecutive touch operation events on the touch screen of the slave mobile device so as to determine the relative position relationship between the first touch operation event and the second touch operation event in the plane coordinate space of the master mobile device.

4. An image displaying method, comprising the following steps of:
creating a data link connection with a slave mobile device and calibrating the clock together with the slave mobile device by a master mobile device so that the time of the slave mobile device keeps synchronized with the time of the master mobile device;
acquiring a first touch operation event corresponding to an input operation performed by a user on a touch screen of the master mobile device and receiving information from the slave mobile device by the master mobile device, wherein the information comprises a second touch operation event corresponding to an input operation performed by the user on a touch screen of the slave mobile device;
determining, by the master mobile device, whether the input operation performed by the user on the touch screen of the master mobile device and the input operation performed by the user on the touch screen of the slave mobile device have finished, and if the determination result is "yes", acquiring a relative position relationship between the slave mobile device and the master mobile device in a plane coordinate space according to the first touch operation event and the second touch operation event; and
generating, by the master mobile device, a first image corresponding to the first touch operation event and displaying the first image on the display screen of the master mobile device, and transmitting the relative position relationship to the slave mobile device so that the slave mobile device displays a second image on the display screen of the slave mobile device according to the relative position relationship, wherein the second image is generated by the slave mobile device according to the second touch operation event, and the first image and the second image form an overall image.

5. The method of claim 4, wherein the step of calibrating the clock together with the slave mobile device by a master mobile device so that the time of the slave mobile device keeps synchronized with the time of the master mobile device comprises:
acquiring, by the master mobile device, a standard time of the master mobile device, transmitting the standard time to the slave mobile device, and controlling the slave mobile device to change the time of the slave mobile device into the standard time of the master mobile device so as to keep the standard time of the master mobile device as the synchronized time between the slave mobile device and the master mobile device.

6. The method of claim 4, wherein the first touch operation event comprises a touch start time of the touch of the user on the master mobile device, a touch end-up time of the touch of the user on the master mobile device, a coordinate of a touch start position of the touch of the user on the master mobile device in the plane coordinate space, and a coordinate of a touch end-up position of the touch of the user on the master mobile device in the plane coordinate space; and
the second touch operation event comprises a touch start time of the touch of the user on the slave mobile device, a touch end-up time of the touch of the user on the slave mobile device, a coordinate of a touch start position of the touch of the user on the slave mobile device in the plane coordinate space, and a coordinate of a touch end-up position of the touch of the user on the slave mobile device in the plane coordinate space;
wherein the plane coordinate space takes a center of the screen of the master mobile device as a coordinate origin, a right side of the center of the screen of the master mobile device as a positive X-axis direction, a left side of the center of the screen of the master mobile device as a negative X-axis direction, an upper side of the center of the screen of the master mobile device as a positive Y-axis direction and a lower side of the center of the screen of the master mobile device as a negative Y-axis direction.

7. The method of claim 4, wherein the step of determining, by the master mobile device, whether the input operation performed by the user on the touch screen of the master mobile device and the input operation performed by the user on the touch screen of the slave mobile device have finished comprises:
determining, by the master mobile device, whether duration of the input operation performed by the user on the touch screen of the master mobile device and duration of the input operation performed by the user on the touch screen of the slave mobile device exceed a preset duration; and
determining that the input operation performed by the user on the master mobile device and the input operation performed by the user on the slave mobile device have finished if the duration of the input operation performed by the user on the touch screen of the master mobile device and the duration of the input operation performed by the user on the touch screen of the slave mobile device exceed the preset duration.

8. The method of claim 4, wherein the step of acquiring a relative position relationship between the slave mobile device and the master mobile device in a plane coordinate space according to the first touch operation event and the second touch operation event comprises:
acquiring the first touch operation event and the second touch operation event that are close in time to each other by the master mobile device, and determining, by the master mobile device, that the first touch operation event and the second touch operation event are consecutive touch operation events if a time interval between the touch end-up time of the first touch operation event and the touch start time of the second touch operation event is smaller than a preset value;
acquiring a trajectory of the first touch operation event on the touch screen of the master mobile device and a trajectory of the second touch operation event on the touch screen of the slave mobile device by the master mobile device; and
determining, by the master mobile device, coordinates of the trajectories of the consecutive touch operation events in the plane coordinate space of the master mobile device according to the trajectory of the first touch operation event of the consecutive touch operation events on the touch screen of the master mobile device and the trajectory of the second touch operation event of the consecutive touch operation events on the touch screen of the slave mobile device so as to determine the relative position relationship between the first touch operation event and the second touch operation event in the plane coordinate space of the master mobile device.

9. A master mobile device, comprising a connecting and calibrating module, a data acquiring module, a data processing module and an image processing module, the connecting and calibrating module being connected to the data acquiring module, the data acquiring module being connected to the data processing module, and the data processing module being connected to the image processing module, wherein:
the connecting and calibrating module is configured to create a data link connection with a slave mobile device and calibrate the clock together with the slave mobile device so that the time of the slave mobile device keeps synchronized with the time of the master mobile device;
the data acquiring module is configured to acquire a first touch operation event corresponding to an input operation performed by a user on a touch screen of the master mobile device and receive information from the slave mobile device, wherein the information comprises a second touch operation event corresponding to an input operation performed by the user on a touch screen of the slave mobile device;
the data processing module is configured to determine whether the input operation performed by the user on the touch screen of the master mobile device and the input operation performed by the user on the touch screen of the slave mobile device have finished, and if the determination result is "yes", the data processing module acquires a relative position relationship between the slave mobile device and the master mobile device in a plane coordinate space according to the first touch operation event and the second touch operation event; and
the image processing module is configured to generate a first image corresponding to the first touch operation event and display the first image on the display screen of the master mobile device, and transmit the relative position relationship to the slave mobile device so that the slave mobile device displays a second image on the display screen of the slave mobile device according to the relative position relationship, wherein the second image is generated by the slave mobile device according to the second touch operation event, and the first image and the second image form an overall image.

10. The master mobile device of claim 9, wherein the connecting and calibrating module acquires a standard time of the master mobile device, transmits the standard time to the slave mobile device, and controls the slave mobile device to change the time of the slave mobile device into the standard time of the master mobile device so as to keep the standard time of the master mobile device as the synchronized time between the slave mobile device and the master mobile device.

11. The master mobile device of claim 9, wherein the first touch operation event comprises a touch start time of the touch of the user on the master mobile device, a touch end-up time of the touch of the user on the master mobile device, a coordinate of a touch start position of the touch of the user on the master mobile device in the plane coordinate space, and a coordinate of a touch end-up position of the touch of the user on the master mobile device in the plane coordinate space; and
the second touch operation event comprises a touch start time of the touch of the user on the slave mobile device, a touch end-up time of the touch of the user on the slave mobile device, a coordinate of a touch start position of the touch of the user on the slave mobile device in the plane coordinate space, and a coordinate of a touch end-up position of the touch of the user on the slave mobile device in the plane coordinate space;
wherein the plane coordinate space takes a center of the screen of the master mobile device as a coordinate origin, a right side of the center of the screen of the master mobile device as a positive X-axis direction, a left side of the center of the screen of the master mobile device as a negative X-axis direction, an upper side of the center of the screen of the master mobile device as a positive Y-axis direction and a lower side of the center of the screen of the master mobile device as a negative Y-axis direction.

12. The master mobile device of claim 9, wherein the data processing module determines whether duration of the input operation performed by the user on the touch screen of the master mobile device and duration of the input operation performed by the user on the touch screen of the slave mobile device exceed a preset duration; and
the data processing module determines that the input operation performed by the user on the master mobile device and the input operation performed by the user on the slave mobile device have finished if the duration of the input operation performed by the user on the touch screen of the master mobile device and the duration of the input operation performed by the user on the touch screen of the slave mobile device exceed the preset duration.

13. The master mobile device of claim 9, wherein the data processing module acquires the first touch operation event and the second touch operation event that are close in time to each other, and determines that the first touch operation event and the second touch operation event are consecutive touch operation events if a time interval between the touch end-up time of the first touch operation event and the touch start time of the second touch operation event is smaller than a preset value;
the data processing module acquires a trajectory of the first touch operation event on the touch screen of the master mobile device and a trajectory of the second touch operation event on the touch screen of the slave mobile device; and
the data processing module determines coordinates of the trajectories of the consecutive touch operation events in the plane coordinate space of the master mobile device according to the trajectory of the first touch operation event of the consecutive touch operation events on the touch screen of the master mobile device and the trajectory of the second touch operation event of the consecutive touch operation events on the touch screen of the slave mobile device so as to determine the relative position relationship between the first touch operation event and the second touch operation event in the plane coordinate space of the master mobile device.
